(19) Europäisches Patentamt
European Patent Office
Office européen des brevets

(11) **EP 2 664 602 A2**

(12) **EUROPEAN PATENT APPLICATION**

(43) Date of publication:
**20.11.2013 Bulletin 2013/47**

(51) Int Cl.:
**C06B 39/00** (2006.01)  **C06B 45/32** (2006.01)
**C06F 3/08** (2006.01)

(21) Application number: **13167728.8**

(22) Date of filing: **14.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.05.2012 IN KO14582011**

(71) Applicant: **United Phosphorus Limited Gujarat (IN)**

(72) Inventors:
• **Shroff, Jaidev Rajnikant**
  **Mumbai 400 052 State of Maharashtra (IN)**
• **Shroff, Vikram Rajnikant**
  **Mumbai 400 052 State of Maharashtra (IN)**
• **Shirsat, Rajan Ramakant**
  **Mumbai 400 052 State of Maharashtra (IN)**

(74) Representative: **Sanderson, Nigel Paul**
  **Harrison Goddard Foote LLP**
  **Saviour House**
  **9 St Saviourgate**
  **York YO1 8NQ (GB)**

(54) **Coated particulate phosphorus, compositions and products containing the same and preparation methods**

(57)    Disclosed herein is a particulate material comprising particles of phosphorus, preferably amorphous red phosphorus at least partially surface-coated with a water soluble dispersing agent. Compositions and products including the particles are also disclosed, and method for their preparation.

EP 2 664 602 A2

Printed by Jouve, 75001 PARIS (FR)

## Description

### Field of Invention:

The present invention relates to coated or encapsulated particles of phosphorous, in particular red phosphorus. More particularly the present invention relates to such particles with reduced phosphine gas emission. The present invention further relates to stable granular compositions and friction compositions comprising encapsulated or coated particles of phosphorous, more especially of red phosphorus. The present invention also relates to a process for preparation of the said particles and compositions.

### Background and Prior art:

Red phosphorus is utilized in various applications, particularly in striking surfaces for safety matches, chemical catalysts, phosphides and pyrotechnics.

Anton von Schrotter is credited with the discovery of red phosphorus in 1847, who also pointed out its significance in the match industry. So-called safety matches are typically sold in a package comprising the matches themselves and a dedicated striking surface. The striking surface typically includes red phosphorus and a suitably abrasive material and the match head includes a component reactive with the red phosphorus such as potassium chlorate. Ignition occurs when the respective materials are brought into contact, along with sufficient energy, in the act of striking the match. The striking surface is typically provided as an integral (outer) part of a matchbox or matchbook but may, in principle, be provided separately. A typical striking surface for safety match boxes comprises about 30-60% of red phosphorus along with other ingredients.

In the prior art, the match making industry has utilized coarse-grained, non-stabilized red phosphorus for manufacturing the striking surfaces for safety matches. The coarse-grained red phosphorus was frequently found to cause pre-ignition problems. The non-stabilized red phosphorus slowly reacted with the atmospheric moisture to generate phosphoric acids and phosphine. A widely used method to overcome these problems was to introduce red phosphorus having a finer particle size which eliminated the pre-ignition problem. It also became a frequent practice in the art to use stabilizers to improve the shelf life of red phosphorus without influencing the striking rate.

The introduction of the rotogravure printing equipment to the matchmaking industry for manufacturing the striking surface further reduced the desired particle size of red phosphorus. These rotogravure equipments were only compatible with finer predefined particle-sized red phosphorus. These rotogravure machines improved the print quality of the striking surface for the safety matches, and at the same time, lowered the usage of red phosphorus considerably. However, a disadvantage of these rotogravure equipments has been their requirement of red phosphorus particles having a strictly defined particle size. It was seen that failure to use red phosphorus of stipulated particle size suitable for rotogravure printing led to a loss of print quality and/or smudging leading to a higher wastage of red phosphorus.

Thus, the safety matches industry requires fine-grained high-quality red phosphorus, for printing to form the striking surface of the matchboxes or the like especially when using the rotogravure printing equipment. The friction composition that is printed on a suitable substrate to form the striking surface must have suitable flow characteristics convenient for the printing equipment.

A typical friction composition comprises a binder, amorphous red phosphorus and other additives. This friction composition is suspended in 30-50% by weight of water. Conventionally, various additives have been used such as viscosity modifiers, anti-foaming agents and humidity resistance enhancing agents. These ingredients are stirred together in a high speed dispersing mixer.

The friction composition typically comprises very finely ground particulate red phosphorus suspended in water. A friction composition having insufficient suspensibility was found to block the cells of the printing equipment, leading to smudging on the printed match surface.

There are other known printing equipments such as foam roller applicators or wheel applicators for printing the friction composition onto the match surface. These applicators are adapted to apply a thicker layer of friction composition on the match surface and thus require a friction composition having higher water content. The friction composition suitable for these applicators comprises a binder in an amount of about 10-30%, amorphous red phosphorus and friction filler.

Again, this friction composition is suspended in 30-50% by weight of water with various additives such as viscosity modifiers, anti-foaming agents and humidity resistance enhancing agents. These ingredients are stirred together in a high speed dispersing mixer.

These friction compositions again comprise very finely ground particulate red phosphorus suspended in water. A friction composition having insufficient suspensibility blocks the cells of the printing equipment, leading to smudging on the printed match surface. There is a need in the art for friction compositions having sufficient suspensibility in water that leads to a smooth and uniform application of the friction composition on the matchbox surface.

One problem plaguing the art of manufacturing striking surfaces such as for matchboxes is the instability of amorphous red phosphorus due to its slow oxidation in air. This causes a gradual release of the toxic phosphine gas. It is known that the decomposition rate of amorphous red phosphorus is directly proportional to the availability of moisture and temperature. In the matchbox making industry, the phosphine gas liberated by the red phosphorus during charging may cause occupational hazard and/or may diffuse through the printing equipment thereby giving rise to corrosion. Further, phosphine is also capable of reacting with moist air to produce acidic products even at places that are remotely separated from the phosphorus sample.

There are various approaches known in the art for minimizing the generation of phosphine gas from red phosphorus including (a) controlling the availability of moisture and oxygen; (b) maintaining an ambient temperature; (c) incorporating stabilizers to inhibit the formation of phosphine; (d) oiling to suppress dust generation; and (e) microencapsulation.

Microencapsulation of particulate red phosphorus reduces its active surface area, which leads to a decrease in the rate of phosphine generation. Microencapsulation generally comprises depositing or producing a thin coating of an encapsulating material on the particles of red phosphorus. The article "Improvements in stability of red phosphorus", Dr. Sebastian Harold, 27th International Pyrotechnics Seminar - Special Session on Red Phosphorus, mentions that the best results were obtained using thermoset resins, which were applied from solution and cured directly on the particulate red phosphorus.

The suppression of phosphine gas emission from red phosphorus as conventionally suggested either relies on the absorption of the generated phosphine by reaction with phosphine traps in the encapsulating matrix or by reduction of the reactivity of the phosphorus surface. A few well known phosphine traps conventionally known in the art are molybdenum oxide (V), mercury (II) oxide, silver nitrate, mercury (II) chloride, iron (III) chloride hexahydrate, copper (II) oxide, activated charcoal, magnesium oxide, aluminum oxide, lead (II) oxide, amidosulfonic acid, ammonium bisulfate, melamine, copper (I) chloride, copper (II) chloride, copper (III) acetylacetonate, potassium iodide, and organic and inorganic ammonium salts. The use of these phosphine traps is not preferred, particularly due to their inorganic origin. Secondly, many of these phosphine traps are known to catalyze and/or accelerate the reactivity of red phosphorus, which is not preferred in the safety match industry due to occupational hazards.

The reduction in the reactivity of the phosphorus surface is usually accomplished by (i) treating it with metal compounds, (ii) treating it with organic compounds, and (iii) treating it first with metal compounds and then with organic compounds. However, the approaches involving treating the phosphorus surface with metal compounds or with metal compounds followed by organic compounds still suffers from the aforesaid disadvantages. Some of the inorganic compounds are known to catalyze the reactivity of phosphorus and thus are not preferred any longer. Moreover, many of these inorganic compounds such as cadmium adipate, cadmium oxalate, cadmium oxide, lanthanum stearate, hydrated tin oxide, titanium dioxide and titanium phosphate contain heavy metals which is undesirable.

The remaining approach of coating/encapsulating with an encapsulating agent leaves much to be desired. A few well known organic coating agents are ε-caprolactam; organosilanes; polyvinyl acetate, polyethylene and unsaturated carboxylic acids; trioxane, caprolactam; waxes, paraffins and chlorinated hydrocarbons; melamine cyanurate; melamine resin; modified polyethylene terephthalate; acyclic or aliphatic compounds having at least one C-C double bond in the alpha position e.g. trans-cinnamaldehyde; and radical inhibitors such as quinones. However, most of these organic encapsulants are synthetic in origin, which frequently led to the formation of acidic surface contaminants. However, these surface contaminants invariably aggravate the suspensibility problem of the resultant friction composition due to in situ salt generation, which blocked the cells of the printing equipment. Often, these organic encapsulants also confer only insufficient protection of the amorphous red phosphorus from the ambient moisture and oxygen thereby leading to a substantial phosphine generation. Particularly, the presence of acidic substances or contaminants has been found to aggravate the release of phosphine gas from red phosphorus [Ref.: US 4115522]. The acidity of the aqueous solution was found to increase the generation of phosphine gas in the following manner:

| Acidity of the aqueous suspension Mg KOH/g material/h | Evolution of phosphine mg/g material/h |
| --- | --- |
| 4.2 | 0.27 |
| 5.2 | 0.39 |
| 5.8 | 0.51 |
| 5.8 | 0.52 |
| 7.7 | 0.53 |

US 3 884 867 teaches phlegmatising finely divided red phosphorus with a solid having a melting point from 50 to 1200C for use as flame retardants. However, these components require neutralizing the surface acidity of phosphorus with sodium carbonate prior to use. This patent also does not specifically suggest any reduction or improvement in the rate of phosphine generation.

US 4 105 735 teaches the use of red phosphorus particles of particle size 100 microns coated with a binder, which melts between 30 to 1800C. The binder consists of a wax i.e. ethylene glycol ester of the wax acid product of chromic acid oxidation of crude Montana wax and/or metal soaps and/or other materials such as melamine, polyacrylonitrile amidosulfonic acid, copper (II) oxide, aluminum oxide and dibromoneopentyl glycol. These binders are suggested to inhibit the formation of phosphine.

US 4 150 188 teaches that the encapsulant for red phosphorus should not be soluble in any of the ingredients involved in the intended use or process such as in the polymerization or molding process. The present inventors believe that this caused a prejudice in the art against the use of water soluble encapsulants for red phosphorus meant for use in the matchmaking industry. Moreover, this patent does not mention any reduction in the phosphine emission originating from the encapsulation of red phosphorus.

US 4 208 317 teaches encapsulating red phosphorus of particle size below 200 microns using a polymer. The polymer does not have a melting or softening point below 900C and has a molecular weight above 2000 D. The preferred polymer is selected from polycarbonates, polyamides, polyolefins, polytetrafluoroethylenes, silicones, polyimide-amides etc. However, this patent also teaches the addition of, upto 100% w/w of the red phosphorus component, oxides of copper, zinc, silver, iron, antimony, magnesium, vanadium, tin and titanium. These inorganic oxides are not preferred for the aforesaid reasons.

US 4 403 052 teaches the use of stabilized red phosphorus along with a metal iodide such as potassium iodide as phosphine suppressing agent. This patent teaches that the phosphine evolution of a poly(ethylene terephthalate) moulding composition containing 4% red phosphorus was reduced to 0.3 ppm at the die and 1.0 ppm during the storage by the addition of 0.6% potassium iodide, according to the table below:

| Phosphine evolution from PET during processing | | | |
|---|---|---|---|
| Additive (%) | | Phosphine concentration (ppm) | |
| KI | Red P | Die | Storage |
| 0.6 | 4.0 | 0.3 | 1.0 |
| 0.35 | 4.0 | 1.5 | 1.0 |
| 0 | 4.0 | 2.0 | 25.0 |

US 4 416 728 teaches the use of red phosphorus encapsulated in a modified melaminic resin as a flame retardant for paper. The encapsulant cationised melaminic resin is prepared from formaldehyde, triethanolamine, melamine and a monohydroxyl aliphatic alcohol having less than 5 carbon atoms.

DE 3344539 A1 teaches a combination of titanium dioxide and titanium phosphate (0.05 - 1.0% measured as Ti) with an organic resin such as epoxy resin, melamine formaldehyde resin or urea-formaldehyde resin (0.1 - 5.0%) to achieve a well stabilized product. This patent discloses a reduction of phosphine evolution and reduction of phosphorus oxidation using the disclosed encapsulant. The disclosed process involves the addition of a titanium compound to slurry of red phosphorus (in water) and adjusting the pH to allow the precipitation of titanium dioxide or titanium phosphate on the red phosphorus particles. Thereafter, an aqueous solution or emulsion of the resin is caused to precipitate on the particulate phosphorus by hardening. This patent still does not teach the presence of a dispersant in the slurry of red phosphorus with water and does not envisage a smooth printing of red phosphorus on any substrate, which remains an unfulfilled need in the art.

US 4 471 080 again teaches stabilization of red phosphorus by encapsulating it in a modified cationized melamine resin. An aqueous melamine precondensate is prepared by reacting melamine, formaldehyde, triethanolamine and a monohydroxyl alcohol, then cationizing it with a mineral acid until the pH is 7 to 7.5. The red phosphorus is dispersed in this solution and heated to 1000C to precipitate a partly cross-linked polymer.

US 4 493 913 teaches coating red phosphorus with a thermosetting resin - modified polyethylene terephthalate having a crystallization temperature of not more than 1200C.

US 4 559 372 discloses the use of mixtures of lanthanide or yttrium compounds to reduce the emission of phosphine from red phosphorus. The disclosed compounds include salts of monocarboxylic acids having 2 to 30 carbon atoms, or aliphatic dicarboxylic acids having 3 to 30 carbon atoms which are either saturated or contains one or more double bonds which may be substituted with halogen atoms, hydroxyl groups, alkoxy groups, mercapto groups, or phenyl, naphthyl or cyclohexyl groups.

EP 0 533 121 teaches that the evolution of phosphine gas from red phosphorus could be reduced by means of alicyclic compounds having at least one carbon double bond in the alpha-position relative to an electron withdrawing group such as aldehyde, ketone, carboxylic acid, carboxylic anhydride, carboxylic ester and their thio analogues. This patent prefers the use of trans-cinnamaldehyde as being especially suitable.

Indian Patent No. 144162 discloses a process for making stabilized red phosphorus consisting of a homogeneous blend of red phosphorus particles with a size of at most about 2 mm and a metal compound of the second or third group of the Periodic System as an oxidation stabilizer, which comprises: intimately blending red phosphorus particles with a size of at most about 2 mm with about 0.25 to 5 weight % of an orthophosphoric acid ester of a long chain aliphatic alcohol, which may be ethoxylated, or phenol; suspending the blend in water and heating the resulting suspension to about 60 to 95°C; gradually admixing the suspension with at least stoichiometric proportions of an aqueous solution of a water-soluble aluminum, magnesium, calcium or zinc salt to cause precipitation of the respective salt of the orthophosphoric acid ester; filtering the resulting mixture, and drying the filter residue at elevated temperature and, if desired, under reduced pressure.

Indian Patent No. IN166171 (685/MAS/1985) discloses a process for making stabilized and desensitized pulverulent flowable red phosphorus, which comprises: (a) freeing, in a first processing stage, an aqueous suspension of red phosphorus with a particle size of 0.0005 to 0.5 mm from residual fractions of yellow phosphorus by boiling it in known manner with diluted sodium hydroxide solution while stirring; (b) stabilizing the red phosphorus in this aqueous suspension with aluminum hydroxide and adding as oxidation catalyst an aqueous or alcoholic solution, emulsion or dispersion of a liquid epoxide resin having a viscosity from 1000 to 1400 mPa.s at 230C and hardenable with a hardener, soluble or emulsifiable in water, in a quantity of 5 to 0.1 mass parts oxidation stabilizer per 95 to 99.9 mass parts red phosphorus the aluminum hydroxide fraction being present in a proportion of 0.01 to 3 mass % and the epoxide fraction being present in a proportion of 0.09 to 4.99 mass %, the percentages being in each case based on the quantity of red phosphorus; and stirring the mixture over a period of 1 to 3 hours at a temperature of 20 to 90°C for precipitating the aluminum hydroxide and simultaneously hardening the epoxide resin; (c) mixing the aqueous suspension of the oxidation stabilized red phosphorus for its desensitization with an aqueous emulsion of di-2-ethylhexylphtalate in a quantity from less than 2 to 0.05 mass parts per more than 98 to 99.95 mass parts stabilized red phosphorus, stirring the mixture at a pH-value between 5 and 9, over a period of 0.5 to 3 hours at 20 to 90°C, and d) filtering and trying the red phosphorus encapsulated at 80 to 120°C.

Indian Patent No. IN170854 (114/MAS/1988) discloses a process for making stabilized pulverulent encapsulated red phosphorus having a particle size of not more than 2 mm comprising the steps of admixing an aqueous suspension of red phosphorous with a water soluble metal salt corresponding to at least one metal hydroxide selected from the group of metals consisting of aluminum, silicon, titanium, chromium, manganese, zinc, germanium, zirconium, niobium, cadmium, tin, leas bismuth and cerium in an amount of 0.1 to 5 weight percent metal hydroxide based on the quantity of red phosphorus, establishing a pH of 4 to 9 in a known manner, adding an aqueous solution of a preliminary condensation product of melamine formaldehyde in an amount corresponding to 1 to 20 weight percentage, based on the quantity of red phosphorus, encapsulating the red phosphorus particles in the final polycondensation product of melamine and formaldehyde by intimately stirring the mixture over a period of 0.5 to 3 hours at a temperature of 40 to 100°C allowing the preliminary condensation product to harden filtering the said encapsulated phosphorus particles and drying them at a temperature in the range of 80 to 120°C.

However, none of these references addresses the suspensibility problem of encapsulated red phosphorus to avoid the smudging of the friction composition on the coated surface. A need remains in the art for friction compositions having sufficient suspensibility in water that leads to a smooth and uniform application of the friction composition on the matchbox surface. A smooth application of the friction composition is known to reduce the striking rate of a safety match, which is very desirable in the art. It is further desirable to reduce the phosphine emission from encapsulated red phosphorus, which has hitherto not been addressed simultaneously with a reduction in the striking rate of the safety match.

These and other problems plaguing the art are addressed by the invention described immediately hereinafter. Thus, the present invention seeks to solve, or at least mitigate, one or more problems which can be seen from the following statements:-

In some embodiments, the present invention seeks to provide granules of red phosphorus with reduced phosphine emission.

In some embodiments, the present invention seeks to provide a friction composition for being printed on a matchbox or the like, such as to form a striking surface, wherein the composition has sufficient suspensibility in water that prevents blocking cells of the printing equipment thereby avoiding smudging on the printed matchbox surface

In some embodiments, the present invention seeks to provide stabilized amorphous red phosphorus that is resistant to slow oxidation in moist ambience.

In some embodiments, the present invention seeks to provide encapsulated amorphous red phosphorus wherein the encapsulating agent does not accelerate the reactivity of phosphorus.

In some embodiments, the present invention seeks to provide encapsulated red phosphorus wherein the encapsulant is an organic material.

In some embodiments, the present invention seeks to provide encapsulated red phosphorus having reduced phosphine emission and simultaneously having high dispersibility in water.

## Summary of the Invention:

According to a first aspect of the present invention there is provided a particulate material comprising particles phosphorus at least partially surface-coated with a water soluble dispersing agent.

Preferably the phosphorus is amorphous red phosphorus.

Preferably said particles of phosphorus are completely surface coated with said dispersing agent.

In some preferred embodiments the water soluble dispersing agent is selected from (i) anionically substituted styrene acrylic polymers; (ii) alkali or alkaline earth metal salt of a sulfonated aromatic formaldehyde condensate; (iii) alkali or alkaline earth metal salt of alkyl naphthalene sulfonate; (iv) alkali or alkaline earth metal salt of lignosulphonic acid; (v) polyvinyl pyrrolidone having an average molecular weight between 8000-3000000 D; (vi) an oligosaccharide or a polysaccharide, (vii) anionic alkyl alkoxylate and (viii) nonionic alkyl alkoxylate.

In some preferred embodiments the water soluble dispersing agent is selected from alkali or alkaline earth metal salt of alkylpolycarboxylic acid; alkyl ether phosphates; alkyl phenol ether phosphates; alkyl phenol ether sulphates; aromatic hydrocarbon sulphonic acids; fatty alcohol sulphates salt; alkyl ether carboxylic acids and salts; alkyl ether sulphates salt; alkyl sulphosuccinamates salt; alkyl phosphates salt; alpha olefin sulphonates, alkyl polysaccharides; sorbitan ester ethoxylates; vegetable oil ethoxylates; fatty alcohol ethoxylates; fatty acid ethoxylates; alkyl phenol ethoxylates; fatty amine ethoxylates; and ethylene glycol esters.

In some preferred embodiments the alkali or alkaline earth metal salt of a sulfonated aromatic formaldehyde condensate is sodium alkylnaphthalenesulfonate-formaldehyde polymer or wherein the alkali or alkaline earth metal salt of alkyl naphthalene sulfonate is sodium diisopropylnaphthalene sulfonate.

In some preferred embodiments the alkali or alkaline earth metal salt of lignosulphonic acid is sodium lignosulphonate.

In some preferred embodiments the oligosaccharide is a disaccharide.

In some preferred embodiments the polysaccharide is selected from dextran, xanthan gum, starch, glycogen, cellulose, chitin, mannan, fructan, xylan, arabinan and dextrin, preferably xanthan gum.

In some preferred embodiments the phosphorus particles are surface coated with a polymeric matrix comprising said water-soluble dispersing agent and a water soluble binder. Preferably the water soluble binder is selected from polyvinyl pyrrolidone, lactose, sucrose, gum Arabic and synthetic gum.

According to a second aspect of the present invention there is provided a stable granular composition comprising the particulate material of the above first aspect wherein said water soluble dispersing agent is present in an amount of about 0.1 % to 5% by weight of particulate phosphorus. Preferably the composition further comprises a water soluble binder (as defined in the first aspect) in an amount of about 0.1-5%.

According to a third aspect of the present invention there is provided a friction composition comprising a slurry of the particulate material according to the first aspect of the invention. In preferred embodiments the water soluble dispersing agent self assembles around the phosphorus particles. In other preferred embodiments the polymeric matrix self assembles around the phosphorus particles.

According to a fourth aspect of the present invention there is provided a striking surface for safety matches comprising a supporting substrate having thereon a layer comprising the particulate material according to the first aspect of the invention.

According to a fifth aspect of the present invention there is provided a process for the preparation of a stable composition of particulate phosphorus, the process comprising at least partially surface-coating phosphorus particles by contacting said particles with (i) a water soluble dispersing agent; or (ii) a polymeric matrix comprising a water soluble dispersing agent and a water soluble binder. Preferably said process includes completely surface coating said particles.

In preferred embodiments of this fifth aspect of the invention the process of at least partially surface coating phosphorus particles comprises the steps of (a) adding a water soluble dispersing agent to a predetermined quantity of water; and optionally, (b) mixing a water soluble binder to the solution; (c) adding and stirring a required quantity of particulate phosphorus to the mixture of step (a) or (b) to obtain dough; (d) extruding the dough of step (c) in extruder to obtain granules; and (e) drying and sieving the granules of step (c) to obtain a composition.

According to a sixth aspect of the present invention there is provided a process for preparing a striking surface for safety matches, the process comprising preparing a particulate material according to the first aspect of the invention and applying the particulate material as a layer to a supporting substrate.

Preferably said layer is applied by a printing process, in particular a rotogravure printing technique or by use of a foam roller applicator or a wheel applicator.

According to a seventh aspect of the present invention there is provided a process for preparing a striking surface for safety matches, the process comprising providing a friction composition according to the third aspect of the invention and applying the friction composition to a supporting substrate to form a striking surface.

Preferably said friction composition is applied by a printing process, in particular a rotogravure printing technique or by use of a foam roller applicator or a wheel applicator.

In a further aspect, the present invention provides a phosphorus particle being at least partially surface-coated with a water soluble dispersing agent. Preferably the phosphorus is amorphous red phosphorus.

In another aspect, the present invention provides a phosphorus particle being at least partially surface-coated with a polymeric matrix comprising a water soluble dispersing agent and at least another water soluble binder.

In another aspect, the present invention provides a stable composition comprising phosphorus particles at least partially surface-coated with (i) a water soluble dispersing agent; or (ii) a polymeric matrix comprising a water soluble dispersing agent and a water soluble binder.

In another aspect, the present invention provides a process for at least partially surface coating or for encapsulating phosphorus particles, said process comprising the following steps:

a) adding a water soluble dispersing agent to a predetermined quantity of water;
b) optionally, mixing a water soluble binder to the solution of step (a);
c) mixing the mixture of step (a) or step (b) to obtain a solution;
d) adding and stirring a required quantity of particulate phosphorus to the mixture of step (c) to obtain dough;
e) extruding the dough of step (d) in extruder to obtain granules; and
f) drying and sieving the granules of step (f) to obtain a composition.

**Detailed description of the invention:**

*Definitions:*

"Water soluble dispersing agent "according to present invention refers to either a non-surface active polymer or a surface-active substance added to a suspension, usually a colloid, to improve the separation of particles and to prevent settling or clumping. The water soluble dispersing agent of present invention also act as water soluble encapsulating material which remains coated and shields the particulate red phosphorus from contacting oxygen and water to prevent the potential degradation products from being generated thereby reducing the generation of phosphine gas.

"Striking surface" refers to a substrate such as a small stick of wood or strip of cardboard with a solidified mixture of red phosphorus particles deposited thereon, such as to form a layer. A striking surface may be added to, or form an integral part of, a matchbox, matchbook or the like.

"Striking rate" according to present invention refers to an average number of strike to ignite the match stick by frictioning on the striking surface.

"Friction Composition" according to present invention refers to a composition used in the match making industry for the preparation of a striking surface.

The present inventors have surprisingly found that a water soluble dispersing agent could act as one of the most efficient moisture blocking encapsulants known for red phosphorus, particularly for amorphous red phosphorus.

Therefore, in an embodiment, present invention describes a particulate material comprising particles of amorphous red phosphorus at least partially surface-coated with a water soluble dispersing agent.

In some preferred embodiments, the water soluble encapsulating material is selected from (i) anionically substituted styrene acrylic polymers; (ii) alkali or alkaline earth metal salt of a sulfonated aromatic formaldehyde condensate; (iii) alkali or alkaline earth metal salt of alkyl naphthalene sulfonate; (iv) alkali or alkaline earth metal salt of lignosulphonic acid; (v) polyvinyl pyrrolidone having an average molecular weight between 8000-3000000 D; and (vi) an oligosaccharide or a polysaccharide, (vii) anionic alkyl alkoxylate and (viii) nonionic alkyl alkoxylate.

Without limitation, the water soluble encapsulant may in preferred embodiments also be selected from alkali or alkaline earth metal salt of alkylpolycarboxylic acid; alkyl ether phosphates; alkyl phenol ether phosphates; alkyl phenol ether sulphates; aromatic hydrocarbon sulphonic acids; fatty alcohol sulphates salt; alkyl ether carboxylic acids and salts; alkyl ether sulphates salt; alkyl sulphosuccinamates salt; alkyl phosphates salt; alpha olefin sulphonates, alkyl polysaccharides; sorbitan ester ethoxylates; vegetable oil ethoxylates; fatty alcohol ethoxylates; fatty acid ethoxylates; alkyl phenol ethoxylates; fatty amine ethoxylates; and ethylene glycol esters.

In an embodiment, the water soluble encapsulating material and the particulate red phosphorus are mixed to water and slurry is prepared therefrom. The word "slurry" as used herein shall be intended to include a suspension, emulsion or a dispersion of particulate red phosphorus (which is encapsulated) in water. It has further been found that the water soluble encapsulating agent self-assembles around the insoluble red phosphorus particles. The prepared slurry is thereafter dried using spray drying or extruded to provide granular red phosphorus particles or converted into powder with suitable process like de-lumping.

Without wishing to be bound by theory, the inventors believe that a portion of the water soluble encapsulating material in the friction composition of the present invention or being encapsulated around particulate red phosphorus detaches itself from the encapsulated red phosphorus particles and surprisingly converts red phosphorus granules to its original particles and also provides sufficient wetting and dispersing properties to those red phosphorus particles. The remaining portion of the encapsulating material remains coated and shields the particulate red phosphorus from contacting oxygen and water to prevent the potential degradation products from being generated thereby reducing the generation of phosphine gas. It has also been found that the first portion of the water soluble dispersing encapsulating material maintains the dispersion of the particulate red phosphorus in an organized state. This is believed to have the beneficial effect of preventing the red phosphorus particles from contacting each other and coalescing to form heavier particles. The smaller particles of red phosphorus therefore remain suspended in water to form uniform slurry, which ensures an uniform printing of the friction composition of the present invention on the match striking surface.

In yet another aspect, the present invention provides a friction composition comprising slurry of the particulate material comprising particles of amorphous red phosphorus at least partially surface-coated with a water soluble dispersing agent.

The water soluble dispersing agent according to an embodiment may preferably be selected from (i) anionically substituted styrene acrylic polymers; (ii) alkali or alkaline earth metal salt of a sulfonated aromatic formaldehyde condensate; (iii) alkali or alkaline earth metal salt of alkyl naphthalene sulfonate; (iv) alkali or alkaline earth metal salt of lignosulphonic acid; (v) polyvinyl pyrrolidone having an average molecular weight between 8000-3000000 ; and (vi) an oligosaccharide or a polysaccharide.

The anionic substituent on the anionically substituted styrene acrylic polymers may be selected from a wide range of substituents including, but not necessarily limited to, sulfonates and phosphonates. In an embodiment, the preferred anionically substituted styrene acrylic polymer is sulfonated or phosphonated styrene acrylic copolymer.

In an embodiment, the preferred alkali or alkaline earth metal salt of a sulfonated aromatic formaldehyde condensate is sodium alkylnaphthalenesulfonate-formaldehyde polymer.

In yet another embodiment, the alkali or alkaline earth metal salt of alkyl naphthalene sulfonate is sodium diisopropylnaphthalene sulfonate.

In yet another embodiment, the preferred alkali or alkaline earth metal salt of lignosulphonic acid is sodium lignosulphonate.

In yet another embodiment, the preferred polyvinyl pyrrolidone having an average molecular weight between 8000-3,000,000 D is polyvinyl pyrrolidone having an average molecular weight of about 60,000 D.

In yet another embodiment, the preferred oligosaccharide is a disaccharide. In this embodiment, the preferred disaccharide is sucrose.

In a preferred embodiment, the preferred polysaccharide is selected from sucrose dextran, xanthan gum, starch, glycogen, cellulose, chitin, mannan, fructan, xylan, arabinan and dextrin. Preferably, the polysaccharide is one having emulsifying properties such as xanthan gum.

The invention will now be described in detail in connection with certain preferred and optional embodiments, so that various aspects thereof may be more fully understood and appreciated.

Red phosphorous is highly flammable, light and heat sensitive and incompatible with strong oxidizing agents, strong bases and generates toxic phosphine gas on oxidation.

Surprisingly, it was found that a water-insoluble dispersant did not appreciably or sufficiently reduce the rate of phosphine gas emission. In contrast, the dispersing nature of the water-soluble dispersing agent in accordance with the present invention ensures a quick and high dispersion of particulate phosphorus during use after dilution in addition to reducing the phosphine gas emission from particulate phosphorus.

Unless otherwise indicated, the term phosphorus particles is intended herein to mean phosphorus, particularly red phosphorus, having a particle size in the range of upto 250 microns. Still more preferably, particulate red phosphorus has a particle size from about 5 microns ($5\mu m$) to about 250 microns ($250\mu m$). Preferably, phosphorus is in an amorphous form. Thus the red phosphorus particles according to the invention most preferably fall within the size range of from about 5 microns ($5\mu m$) to about 250 microns ($250\mu m$).

In embodiments, said phosphorus particles may be substantially, still more preferably completely, coated or encapsulated with a water soluble dispersing agent.

In preferred embodiments, the water soluble dispersing agent completely surrounds said phosphorus particles and thereby substantially or completely prevents contact of said phosphorus particles with moisture, so substantially reducing the rate of phosphine gas emission therefrom.

The amount of the water soluble dispersing agent may be conveniently selected by a person skilled in the art, based, for example, on the known properties of the water soluble dispersing agent, to substantially, or completely, encapsulate the particulate phosphorus desired to be encapsulated. In some preferred embodiments, the water soluble dispersing agent may be present in an amount of about 0.1 % to 5% by weight of particulate phosphorus, although the invention is not intended to be limited to these amounts of the water soluble dispersing agents. In an embodiment, the friction composition of the present invention may comprise any amount of the water soluble dispersing agent which does not reduce the percent purity of the amorphous red phosphorus sample.

In an embodiment, the preferred water soluble dispersing agent is selected from sodium lignosulfonate and sodium naphthalene sulfonate formaldehyde condensate.

In an embodiment, the water soluble encapsulant formulation or composition of the present invention additionally comprises a water soluble binder. It has further been found that the presence of a water soluble binder additionally provides a superior protective effect which reduces the dust formation during the handling/transportation and further reduces the release rate of phosphine gas.

Therefore, in another aspect, the present invention provides phosphorus particles at least partially, and preferably completely, surface-coated with a polymeric matrix comprising a water-soluble dispersing agent and a water soluble binder.

The water soluble binder used in this aspect of the invention may be selected by the skilled person from among known water soluble binders in the light of such person's knowledge of their properties and may preferably be selected from polyvinyl pyrrolidone, polyvinyl alcohol, lactose, sucrose, gum Arabic and synthetic gum.

The amount of the water soluble binder may be conveniently selected by a person skilled in the art based, for example, on the known properties of the water soluble binder. In an embodiment, the water soluble polymer may be present in an amount of about 0.1-50% by weight of the water soluble dispersing agent, although the invention is not intended to be limited to these amounts of the water soluble binders.

The present invention encompasses stable extruded granules of phosphorous encapsulated with water soluble dispersing agent which at least substantially eliminates phosphine gas generation during storage, and significantly reduces or eliminates dusting hazards while handling.

In embodiments, the particulate phosphorus may be presented as a formulation that may be used as the friction composition in the match making industry. A friction composition is used in the match making industry for the preparation of a striking surface. In these embodiments, the present invention provides a stable composition comprising phosphorus particles at least partially surface-coated with a water soluble dispersing agent.

In other embodiments, the present invention provides a stable composition comprising phosphorus particles at least partially, and preferably completely, surface-coated with a polymeric matrix comprising a water soluble dispersing agent and a water soluble binder.

In an embodiment, the stable composition of the present invention comprises red phosphorous present upto a maximum of about 99% by weight of composition with the remaining amount comprising a water soluble dispersing agent and/or an optional water soluble binder.

In such embodiments, the composition of the present invention may be formulated as dry flowable, extruded dry flowable or wettable powder, tablet, pellet, water dispersible soluble powder, dusts, microgranules, spray granules, coated granules, adsorbed granules, water dispersible granules, water soluble granules and microcapsules and wet cake.

The particulate phosphorus and a composition comprising the same according to this invention may be prepared by a process described hereinafter.

Thus, in yet another aspect, the present invention provides a process for the preparation of a stable composition of particulate phosphorus, said process comprising:

at least partially, and preferably completely, surface-coating phosphorus particles with (i) a water soluble dispersing agent; or (ii) a polymeric matrix comprising a water soluble dispersing agent and a water soluble binder.

In some preferred embodiments, the present invention provides a stable extruded granule composition comprising red phosphorus particles at least partially, and preferably completely, surface-coated with a water soluble dispersing agent.

In other preferred embodiments the present invention provides a stable extruded granule composition comprising red phosphorus particles at least partially, and preferably completely, surface-coated with a polymeric matrix comprising a water soluble dispersing agent and a water soluble binder.

Normal Red Phosphorus powder has the problem of Phosphine gas generation on storage and dusting hazards while handling. The encapsulated red phosphorous of the present invention has less exposure of toxic Phosphine gas to end user while handling the Red Phosphorus container; less hazardous of explosive dust of Red Phosphorus to end user while handling the Red Phosphorus container and is easy to handle.

In another embodiment the present invention provides a simple, cost effective process for preparation of stable extruded granules of encapsulated Red Phosphorous comprising following steps:

a) adding a water soluble dispersing agent to a predetermined quantity of water;
b) optionally, mixing a water soluble binder to the solution of step (a);
c) mixing the mixture of step (a) and step (b) to obtain a solution;
d) adding and stirring a required quantity of particulate phosphorus to the mixture of step (c) to obtain dough;
e) extruding the dough of step (d) in extruder to obtain granules; and

f) drying and sieving the granules of step (f) to obtain a composition.

In another embodiment the present invention provides a striking surface for safety matches comprising a supporting substrate having thereon a layer comprising the particulate material comprising particles of amorphous red phosphorus at least partially surface-coated with a water soluble dispersing agent.

It is known that oiled Red phosphorus, dust depressant Red phosphorus and conventionally encapsulated Red phosphorus does not convert into original particle size due to agglomeration and increased particle size and also due to polymeric insoluble coating. However, the encapsulated Red phosphorous according to the present invention, more particularly when in extruded granular form, has easy dispersion and disintegration in water/solution. Further, encapsulation in accordance with the present invention is believed to have no significant adverse effect, if any, on property of end product like striking rate, ignition as the coating is water soluble.

The instant invention is more specifically explained by following examples. However, it should be understood that the scope of the present invention is not limited by the examples in any manner. It will be appreciated by any person skilled in this art that the present invention includes following examples and further can be modified and altered within the technical scope of the present invention.

**EXAMPLES:**

EXAMPLE 1:

| Component | % | Function |
|---|---|---|
| Red Phosphorus | 98.75 | Active |
| Sodium lignosulphonate | 01.00 | Water soluble dispersing agent |
| Polyvinyl pyrolidone | 0.25 | Water soluble binder |
| Total | 100 | |

Process for Manufacturing:

Added sodium lignosulfonate 1% to a required quantity of water. Polyvinyl pyrrolidone 0.25% was mixed to the solution to obtain a second solution. A required quantity of red phosphorus was thereafter added to the solution to prepare a dough. The dough was extruded in an extruder to obtain granules which were dried in an oven. The resulting dried granules were thereafter sieved thereby to obtain the target composition having a desired particle size.

EXAMPLE 2:

| Component | % | Function |
|---|---|---|
| Red Phosphorus | 99.5 | Active |
| Xanthan gum | 0.50 | Water soluble dispersing agent |
| Total | 100 | |

**Process:**

Added xanthan gum 0.50% to a required quantity of water. A required quantity of red phosphorus was thereafter added to the solution to prepare a dough. The dough was extruded in an extruder to obtain granules which were dried in an oven. The resulting dried granules were thereafter sieved to obtain the target composition having a desired particle size.

## Method for the measurement of phosphine gas detection and quantification:

Uniphos 250 (PM), available from United Phosphorus Limited, is a portable phosphine monitoring equipment used for the measurement of phosphine gas from the samples of red phosphorus. This is a microprocessor based instrument calibrated for the measurement of phosphine gas in the concentration range of 0 - 2000 ppm. The electrochemical sensor present within this equipment generates an electric current in response to the presence of phosphine gas in the tested sample. The generated electric current is then correlated to the phosphine concentration and displayed on the screen.

1 gram red phosphorus was weighed and packed in a filter paper of 6 cm X 7.5 cm. A 125 mL glass trap was vertically placed over the red phosphorus sample to substantially cover the sample. The inlet and outlet caps were fitted and tightened. The air tightness of the arrangement was ensured with silicon wax and Teflon tape. Rubber tubes of 12 cm each were fitted onto the inlet and outlet taps. The other end of the rubber tubes was clamped.

A 105 cm tube was attached to the outlet of a phosphine analyzer and a 6 cm tube was attached to the filter tube of the phosphine analyzer inlet.

The phosphine trap with red phosphorus was placed in 450C incubator or ambient temperature incubator. The phosphine content in the trap was analyzed at required time intervals. The glass trap was taken out from the incubator and cooled to room temperature. The phosphine analyzer was then started along with the inbuilt circulating pump. The initial reading on the screen was zero when the analyzer was open to air, otherwise the reading was calibrated to zero.

The circulating pump was turned off. The inlet end of the glass trap was attached to the outlet end of the phosphine analyzer. The outlet end of the glass trap was connected to the inlet end of the phosphine analyzer. The clamp was removed to make a closed loop comprising the glass trap and phosphine analyzer for phosphine circulation. The circulating pump was then turned on when the phosphine analyzer began displaying the phosphine concentration in ppm. The stable phosphine concentration was then noted. The circulating pump was then turned off. The end of the glass trap was bound with a clamp and the attached ends of the phosphine analyzer were removed. The circulating pump was then turned on and the initial phosphine concentration of the ambient air was set to zero. The glass trap was then placed at 450C in the incubator or the ambient till the next measurement.

The phosphine concentration reading (in ppm) was converted to phosphine generation in mg per gram of red phosphorus by taking the sample dilution into account. The total volume of the closed loop was 250 mL during the analysis. A dilution factor of 1.282 was considered for calculation, using the following formulae:

Phosphine generation in mg per gram of red phosphorus was calculated as follows

$$(\text{first reading}) = (\text{ppm reading}/4)/\text{weight of the sample; and}$$

Phosphine generation in mg per gram of red phosphorus was calculated as follows

$$(\text{subsequent readings}) = \frac{((\text{ppm reading}/4)\text{X} (1.282) \text{ nos. of dilution}}{\text{Weight of the sample}}$$

## Comparative Example 1

Using the process described above, the following compositions were prepared and compared with the conventional compositions.

| Sample | Sample Description |
|---|---|
| Normal RP-1 | Non-encapsulated red phosphorus powder |
| Encapsulated 0.3/100 | Encapsulation of red phosphorus using interfacial condensation polymerization between a polyisocyanate + diamine, wall thickness 0.3%, final product was encapsulated red phosphorus powder |
| Co-6 EO 1.0% | Encapsulated using castor oil 6- mole ethoxylate (1%), final product was red phosphorus powder |
| RP extruded 0.50% Xanthan gum | Encapsulated using polymeric matrix of xanthan gum solution; final product was red phosphorus extruded granule |

(continued)

| Sample | Sample Description |
|---|---|
| RP extruded 1% SLS | Encapsulated using polymeric matrix of sodium lignosulfonate (water soluble) solution; final product was red phosphorus extruded granule with high water dispersibility |

The comparative phosphine measurements were made at different time intervals at 45°C with stored samples. Each measurement was repeated in duplicate.

| Sample | 24 hr phosphine generation mg/gm | 48 hr phosphine generation mg/gm | 56 hr phosphine generation mg/gm | 100 hr phosphine generation mg/gm | 148 hr phosphine generation mg/gm |
|---|---|---|---|---|---|
| Normal RP 1 | 15.3 | 25.7 | 44.7 | 81.8 | 147.6 |
| Normal RP -2 | 17.2 | 31.8 | 46.6 | 93.5 | 163.6 |
| Encapsulated 0.3/100 C-9 (6) - 1 | 3.3 | 5.8 | 9.4 | 16.5 | 32.1 |
| Encapsulated 0.3/100 C-9 (6) - 2 | 3.4 | 5.6 | 9.9 | 19.9 | 28.1 |
| Co-6 EO 1.0% - 1 | 5.1 | 8.1 | 10.7 | 15.2 | 21.4 |
| Co-6 EO 1.0% - 2 | 5.4 | 10.2 | 14.2 | 21.9 | 30.7 |
| RP extruded 1.0% | 1.0 | 3.5 | 5.3 | 9.4 | 14.7 |
| Xanthan gum - 1 | | | | | |
| RP extruded 1.0% Xanthan gum -2 | 1.7 | 3.7 | 4.4 | 7.1 | 13.0 |
| RP extruded 1% SLS - 1 | 1.0 | 1.8 | 3.2 | 5.1 | 7.8 |
| RP extruded 1% SLS - 2 | 0.7 | 1.0 | 0.8 | 1.6 | 3.3 |

It was found that encapsulation using polyurea shell wall and/or castor oil 6-mole ethoxylate provides a reduction in phosphine emission as compared with non-encapsulated phosphorus. However, encapsulation using a water soluble material, preferably a dispersant material, led to a surprisingly high reduction in phosphine emission over shorter as well as longer periods of time.

## Comparative Example 2

| Sample | Sample Description |
|---|---|
| Normal RP | Non-encapsulated red phosphorus powder |

(continued)

| Sample | Sample Description |
|---|---|
| RP extruded 1% SLS | Encapsulating using a polymeric matrix comprising sodium lignosulfonate (water soluble) solution; final product was extruded granules of red phosphorus having high water dispersibility |
| RP extruded 0.5% PVP + 0.5% SLS | Encapsulation using polymeric matrix of sodium lignolsulfonate + polyvinyl pyrrolidone polymer solution (water soluble); final product was extruded granules of red phosphorus having high water dispersibility |
| RP extruded without polymer | Encapsulation without any polymer; final product was extruded granules; extrusion medium was water and granules were dried after granulation; final product was red phosphorus extruded granules. |

The comparative phosphine measurements were made at different time intervals at 45°C with stored samples. Each measurement was repeated in duplicate.

| Sample | 24 hr phosphine generation mg/gm | 6 day phosphine generation mg/gm | 9 day phosphine generation mg/gm |
|---|---|---|---|
| Normal RP - 1 | 77.7 | ---- | 312.9 |
| Normal RP - 2 | 89.6 | ----------- | 313.6 |
| RP extruded 1% SLS - 1 | 5.2 | -------- | 6.4 |
| RP extruded 1% SLS - 2 | 6.8 | -------- | 6.2 |
| RP extruded 1% SLS - 3 | 5.7 | ------ | 7.0 |
| RP extruded 1% SLS - 4 | 3.2 | ------- | 4.4 |
| RP extruded 0.5% PVP + 0.5% SLS - 1 | 0.0 | 5.0 | 3.52 |
| RP extruded 0.5% PVP + 0.5% SLS -2 | 0.0 | 5.92 | 4.67 |
| RP extruded without polymer - 1 | ------------ | 12.11 | 11.09 |
| RP extruded without polymer - 2 | ------- | 15.22 | 14.11 |

It was found that encapsulation using a water soluble material, preferably a dispersant material such as sodium lignosulfonate, led to a surprisingly high reduction in phosphine emission over shorter as well as longer periods of time.

The addition of a water soluble polymer such as polyvinyl pyrrolidone to the encapsulant polymeric matrix further reduced the phosphine gas emission.

It was further seen that mere extruded product i.e. without any water-soluble polymeric matrix encapsulation exhibited substantially higher phosphine gas emission and does not disintegrate on adding into water. It was concluded that extrusion alone, without any water-soluble polymeric matrix encapsulation did not substantially curtail the phosphine gas emission.

**Comparative Example 3**

| Sample | Sample Description |
|---|---|
| Normal RP | Non-encapsulated red phosphorus powder |

(continued)

| Sample | Sample Description |
|---|---|
| Encapsulated 0.3/100 C-59 (6) | Encapsulation using interfacial condensation polymerization between a polyisocyanate + diamine wall thickness 0.3%, final product was encapsulated red phosphorus powder |
| RP extruded SLS | Encapsulation using polymeric matrix of sodium lignosulfonate; final product was extruded granules of red phosphorus having high water dispersibility |

The comparative phosphine measurements were made at different time intervals at 45°C with stored samples. Each measurement was repeated in duplicate.

| Sample | 30-day phosphine generation mg/gm |
|---|---|
| Normal RP | 1646.5 |
| Encapsulated 0.3/100 C59 - 6 | 147.4 |
| RP extruded SLS - 1 | 18.4 |
| RP extruded SLS - 2 | 13.0 |

It was found that encapsulation using a water soluble material, preferably a dispersant material such as sodium lignosulfonate, led to a surprisingly high reduction in phosphine emission over a 30-day period.

**Comparative Example 4**

Using the process described in the above examples 1-2 of the present invention, comparative compositions were prepared according to the instant invention and compared to the conventional formulations to study the phosphine-inhibition effect of water solubility of the encapsulant-dispersing agent and the effect of presence/absence of binder from the encapsulating matrix.

| Sr. No. | Encapsulating agent | 350 BSS retention on wetting in water (15% maximum stipulated) | Comparative phosphine emission mg/gram of RP in 48 hrs at 45°C | Remarks |
|---|---|---|---|---|
| 1 | Normal RP powder | 2.58% | 89.76 | Very high phosphine gas emission |
| 2 | Normal RP extruded particles | 7.8% | 27.82 | High phosphine emission and incomplete disintegration |
| 3 | Modified styrene acrylic polymer | 7.92% | 10.77 | Low phosphine emission; complete disintegration |
| 4 | sodium alkylnaphthalenesulfonate-formaldehyde polymer | 1.52% | 10.77 | Low phosphine emission; complete disintegration |
| 5 | Sodium diisopropylnaphthalene sulfonate | 2.09% | 14.36 | Low phosphine emission; complete disintegration |
| 6 | Sodium lignosulfonate | 1.28% | 5.20 | Low phosphine emission; complete disintegration |

(continued)

| Sr. No. | Encapsulating agent | 350 BSS retention on wetting in water (15% maximum stipulated) | Comparative phosphine emission mg/gram of RP in 48 hrs at 45°C | Remarks |
|---------|---------------------|---------------------------------------------------------------|---------------------------------------------------------------|---------|
| 7 | Polyvinyl pyrrolidone (60000 D) | 2.58% | 12.92 | Low phosphine emission; complete disintegration |
| 8 | Sucrose | 2.06% | 0.72 | Very Low phosphine emission; complete disintegration |
| 9 | Poly vinyl alcohol | 69.21% | 13.28 | Low phosphine emission but no disintegration |
| 10 | Ammonium sulfate | 2.70% | 46.67 | High phosphine emission, good disintegration |
| 11 | Xanthan gum | 70.15% | 10.90 | Low phosphine emission but no disintegration |
| 12 | sodium alkylnaphthalenesulfonate-formaldehyde polymer + Sucrose | 2.23% | 5.83 | Very Low phosphine emission; complete |
| 13 | Modified styrene acrylic polymer + sucrose | 3.27% | 7.63 | Very Low phosphine emission; complete disintegration |
| 14 | Sodium lignosulfonate + sucrose | 2.05% | 2.80 | Very very low phosphine emission; complete disintegration |
| 15 | Sodium lignosulfonate + polyvinyl pyrrolidone (60000 D) | 2.16% | 3.4 | Very very low phosphine emission; complete disintegration |

**Advantages of one or more aspects or embodiments of the present invention:**

The encapsulated Red Phosphorous of the present invention has following advantageous properties:

a) low Phosphine gas generation;

b) low dusting compared to Red Phosphorous powder as Red phosphorous of the present invention is in extruded/granular form and consequently, low pre-ignition;

c) has low corrosive effect to container due to stabilization of Red Phosphorous;

d) high striking rate and ignition property of the end product;

e) low cost and easy process as the same is prepared in wet cake stage;

f) less process hazards;

g) the resultant friction composition is capable of easy dispersion or disintegration in water or water based solution during matchmaking process;

h) no change in granulometry or particle size;

i) less overheads while end using as easily flowable granules and easily dispersible as have wetting and dispersing property;

j) does not gives its residual effect (as soluble in water used for friction composition) like other coating/encapsulating agent;

k) granules are easily converted into original Red phosphorus powder on wetting in water; and

l) reduces dusting during charging.

The invention has been described above with reference to the specific examples. It should be noted that the example(s) appended above illustrate rather than limit the invention, and that those skilled in the art will be able to design many alternative embodiments without departing from the scope of the appended claims. Other than in the operating examples provided hereinbefore or where otherwise indicated, all numbers  expressing quantities of ingredients or reaction conditions are to be understood as being modified in all instances by the term "about".

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

**Claims**

1.  A particulate material comprising particles of amorphous red phosphorus at least partially surface-coated with a water soluble dispersing agent.

2.  The particulate material as claimed in claim 1 wherein the water soluble dispersing agent is selected from (i) anionically substituted styrene acrylic polymers; (ii) alkali or alkaline earth metal salt of a sulfonated aromatic formaldehyde condensate; (iii) alkali or alkaline earth metal salt of alkyl naphthalene sulfonate; (iv) alkali or alkaline earth metal salt of lignosulphonic acid; (v) polyvinyl pyrrolidone having an average molecular weight between 8000-3000000 D; (vi) an oligosaccharide or a polysaccharide, (vii) anionic alkyl alkoxylate and (viii) nonionic alkyl alkoxylate and/or (viii) alkali or alkaline earth metal salt of alkylpolycarboxylic acid; alkyl ether phosphates; alkyl phenol ether phosphates; alkyl phenol ether sulphates; aromatic hydrocarbon sulphonic acids; fatty alcohol sulphates salt; alkyl ether carboxylic acids and salts; alkyl ether sulphates salt; alkyl sulphosuccinamates salt; alkyl phosphates salt; alpha olefin sulphonates, alkyl polysaccharides; sorbitan ester ethoxylates; vegetable oil ethoxylates; fatty alcohol ethoxylates; fatty acid ethoxylates; alkyl phenol ethoxylates; fatty amine ethoxylates; and ethylene glycol esters.

3.  The particulate material as claimed in claim 2 wherein the alkali or alkaline earth metal salt of a sulfonated aromatic formaldehyde condensate is sodium alkylnaphthalenesulfonate-formaldehyde polymer or wherein the alkali or alkaline earth metal salt of alkyl naphthalene sulfonate is sodium diisopropylnaphthalene sulfonate.

4. The particulate material as claimed in claim 2, wherein the alkali or alkaline earth metal salt of lignosulphonic acid is sodium lignosulphonate.

5. The particulate material as claimed in claim 2, wherein the oligosaccharide is a disaccharide.

6. The particulate material as claimed in claim 2, wherein the polysaccharide is selected from dextran, xanthan gum, starch, glycogen, cellulose, chitin, mannan, fructan, xylan, arabinan and dextrin, preferably xanthan gum.

7. The particulate material as claimed in any preceding claim wherein the phosphorus particles are surface coated with a polymeric matrix comprising said water-soluble dispersing agent and a water soluble binder.

8. The particulate material as claimed in claim 7 wherein the water soluble binder is selected from polyvinyl pyrrolidone, lactose, sucrose, gum Arabic and synthetic gum.

9. A stable granular composition comprising the particulate material of any preceding claim and wherein said water soluble dispersing agent is present in an amount of about 0.1 % to 5% by weight of particulate phosphorus.

10. A stable granular composition as claimed in claim 9 wherein said water soluble binder is present in an amount of about 0.1-5%.

11. A friction composition comprising a slurry of the particulate material according to any of claims 1 to 8.

12. A friction composition as claimed in any of claims 1 to 8 wherein the water soluble dispersing agent self assembles around the phosphorus particles.

13. A friction composition as claimed in claim 9 or 10 wherein the polymeric matrix self assembles around the phosphorus particles.

14. A striking surface for safety matches comprising a supporting substrate having thereon a layer comprising the particulate material according to any of claims 1 to 8.

15. A process for the preparation of a stable composition of particulate phosphorus, the process comprising at least partially surface-coating phosphorus particles by contacting said particles with (i) a water soluble dispersing agent; or (ii) a polymeric matrix comprising a water soluble dispersing agent and a water soluble binder.

16. The process according to claim 15, wherein the process of at least partially surface coating phosphorus particles comprises the steps of (a) adding a water soluble dispersing agent to a predetermined quantity of water; and optionally, (b) mixing a water soluble binder to the solution; (c) adding and stirring a required quantity of particulate phosphorus to the mixture of step (a) or (b) to obtain dough; (d) extruding the dough of step (c) in extruder to obtain granules; and (e) drying and sieving the granules of step (c) to obtain a composition.

17. A process for preparing a striking surface for safety matches, the process comprising preparing a particulate material as claimed in any of claims 1 to 8 and applying the particulate material as a layer to a supporting substrate.

18. A process as claimed in claim 17 wherein said layer is applied by a printing process, preferably a rotogravure printing technique or by use of a foam roller applicator or a wheel applicator.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4115522 A
- US 3884867 A
- US 4105735 A
- US 4150188 A
- US 4208317 A
- US 4403052 A
- US 4416728 A
- DE 3344539 A1

- US 4471080 A
- US 4493913 A
- US 4559372 A
- EP 0533121 A
- IN 144162
- IN IN166171
- IN IN170854